# EUROPÄISCHE PATENTANMELDUNG

(11) **EP 1 189 103 A1**
(43) Veröffentlichungstag der Anmeldung: **20.03.2002**
(21) Anmeldenummer: 01114556.2
(22) Anmeldetag: 18.06.2001
(51) Int. Cl.: G03B 27/58

(54) **Digitales photographisches Kopiergerät mit Papier-Transportvorrichtung**

(30) Priorität: 03.08.2000 DE 10037781
(71) Anmelder: Agfa-Gevaert AG, 51373 Leverkusen (DE)
(72) Erfinder: Schindler, Hans-Georg, 83607 Holzkirchen (DE)

(57) **Zusammenfassung**

Es wird eine Vorrichtung (1) zum Beschreiben von Aufzeichnungsmaterial (2) mit Bildinformationen vorgeschlagen. Die Bildinformationen sind mehreren Bildern (B1 bis B13) zugeordnet. In einem Markierungsmittel (3) werden Markierungen (M1 bis M14) auf das Aufzeichnungsmaterial (2) aufgebracht, die den mehreren Bildern (B1 bis B13) zugeordnet sind. Eine Ausgabeeinheit (4) dient zum Ausgeben der Bildinformationen auf das Aufzeichnungsmaterial (2). Mit einem ersten Transportmittel (5) wird das Aufzeichnungsmaterial (2) in dem Markierungsmittel (3) transportiert. Zum Transportieren des Aufzeichnungsmaterials (2) in der Ausgabeeinheit (4) dient ein zweites Transportmittel (6). Das erste Transportmittel (5) und das zweite Transportmittel (6) sind dabei so ausgestaltet, daß die Transportrichtung (T4, R4) des Aufzeichnungsmaterials in der Ausgabeeinheit (4) unabhängig vom Transport des Aufzeichnungsmaterials (2) in den Markierungsmittel (3) eingestellt werden kann.

## Beschreibung

Die vorliegende Erfindung betrifft eine Vorrichtung und ein Verfahren zum Beschreiben von Aufzeichnungsmaterial mit Bildinformationen gemäß den Oberbegriffen der Ansprüche 1 bzw. 14.

Aus der Europäischen Patentanmeldung EP 0 924 558 A1 sind eine solche Vorrichtung und ein solches Verfahren bereits bekannt. Die EP 0 924 558 A1 beschreibt einen fotografischen Printer, mit dem Bildinformationen mehrerer Bilder auf fotosensitives Material aufbelichtet werden können. Das bandförmige fotosensitive Material wird zunächst für jedes aufzubelichtende Bild in einem Markierungsmittel mit einer Markierung gekennzeichnet. Die jeweilige Markierung kann dann von einem in einer Ausgabeeinheit des bekannten Printers angeordneten Sensors erfaßt werden. Diese Ausgabeeinheit dient zum Ausgeben der zuvor ermittelten Bildinformationen der einzelnen Bilder auf das fotosensitive Aufzeichnungsmaterial. Die von dem Markierungsmittel auf das fotosensitive Material aufgebrachte Markierung dient dazu, den Beginn eines Ausgabevorganges zum Ausgeben der Bildinformationen eines der Bilder durch die Ausgabeeinheit vorzugeben. Wird nämlich eine solche Markierung von dem Sensor erfaßt, so wird abhängig von diesem Erfassen der Markierung der Ausgabevorgang gestartet. Bilddaten mit den Bildinformationen der einzelnen auf das fotosensitive Material auszugebenden Bilder sind in einem Speicher abgespeichert und werden per Ausgabeeinheit bei Bedarf zugeführt. Der Transport des fotosensitiven Materials wird in dem bekannten Printer gestoppt, sofern Bilddaten mit Bildinformationen eines nächsten Bildes, das auf das fotosensitive Material auszugeben ist, noch nicht in dem Printer verfügbar sind, nachdem zuvor ein Bild durch die Ausgabeeinheit auf das Material beschrieben wurde. Anschließend wird das fotosensitive Material sowohl in dem Markierungsmittel als auch in der Ausgabeeinheit zurückgefahren, und zwar solange, bis die Markierung des nächsten, auf das fotosensitive Material zu beschreibenden Bildes hinter dem Sensor zum Erkennen der Markierung positioniert ist. Nachdem also diese Markierung hinter der Position des Sensors angelangt ist, wird der Rücktransport des fotosensitiven Materials gestoppt. Der Printer wartet nun auf das Eintreffen der fehlenden Bilddaten. Nachdem diese eingetroffen sind, erfolgt ein erneuter Transport des fotosensitiven Materials von dem Markierungsmittel in Richtung der Ausgabeeinheit. Die Ausgabe der Bildinformationen des nächsten auszugebenden Bildes wird mit dem Erkennen der zuvor zurückgefahrenen, zugehörigen Markierung durch den Sensor veranlaßt. Der Transport des gesamten, im Printer befindlichen, fotosensitiven Materials durch den bekannten Printer erfolgt durchgehend in die gleiche Richtung, also entweder von dem Markierungsmittel in Richtung der Ausgabeeinheit oder umgekehrt von der Ausgabeeinheit in Richtung des Markierungsmittels. Aufgrund des Zurückfahrens des fotosensitiven Materials ist es daher möglich, den ungenutzten Verbrauch des Materials nach einer Unterbrechung der Zuführung der Bilddaten gering zu halten. Allerdings ist der Transportmechanismus des aus der EP 0 924 558 A1 bekannten Printers aufwendig ausgestaltet.

Der vorliegenden Erfindung liegt daher die Aufgabe zugrunde, eine Vorrichtung und ein Verfahren zum Beschreiben von Aufzeichnungsmaterial mit Bildinformationen anzugeben, so daß auf einfache Weise der ungenutzte Verbrauch von Aufzeichnungsmaterial geringgehalten werden kann.

Diese Aufgabe wird durch die technische Lehre des Anspruchs 1 oder des Anspruchs 14 gelöst.

Dadurch, daß erfindungsgemäß das Transportmittel im Bereich der Ausgabeeinheit und das Transportmittel im Bereich des Markierungsmittels so ausgestaltet sind, daß die Transportrichtung des Aufzeichnungsmaterials in der Ausgabeeinheit unabhängig von dem Transport in dem Markierungsmittel einstellbar ist, ist es möglich, insbesondere das Transportmittel im Bereich des Markierungsmittels technisch und konstruktiv einfach auszugestalten. Dieses Transportmittel im Bereich des Markierungsmittels muß vorteilhafterweise nämlich nicht gewährleisten, daß bei einem Rücktransport des Aufzeichnungsmaterials in der Ausgabeeinheit ebenfalls ein einwandfreier und hoch exakter Rücktransport des Aufzeichnungsmaterials im Markierungsmittel ermöglicht wird. Aufgrund der Erfindung kann das Aufzeichnungsmaterial in der Ausgabeeinheit zurückgefahren werden, ohne daß das Aufzeichnungsmaterial gleichzeitig ebenfalls im Markierungsmittel zurückgefahren wird. Das Transportmittel im Bereich des Markierungsmittels muß daher keinen bezüglich der Transportrichtung des Aufzeichnungsmaterials umschaltbaren Antrieb umfassen. Der Begriff Transportmittel kann hier alle zum Transportieren des Aufzeichnungsmaterials vorgesehenen Komponenten umfassen, insbesondere Transportrollen, Antriebe und ebenfalls ein Steuermittel zum Ansteuern der Antriebe und Transportrollen. Des Weiteren kann auch eine Führungseinrichtung, die zum Führen des Aufzeichnungsmaterials beim Transport durch das Markierungsmittel Verwendung findet, nur in die Transportrichtung vom Markierungsmittel hin zur Ausgabeeinheit das Aufzeichnungsmaterial hoch exakt führend ausgestaltet sein. Ein Führen des Aufzeichnungsmaterials in entgegengesetzter Richtung, das heißt, von der Ausgabeeinheit in Richtung des Markierungsmittels, ist nicht notwendig. Auch diese Führungseinrichtung kann daher vorteilhafterweise konstruktiv und bezüglich der einzuhaltenden Fertigungstoleranzen einfach ausgestaltet sein.

Gemäß einer vorteilhaften Ausgestaltung der Erfindung ist ein Empfangsmittel enthalten, mit dem ein Empfangen von Bilddaten, die die Bildinformationen der auf das Aufzeichnungsmaterial zu schreibenden Bilder enthalten. Ein solches Empfangsmittel kann beispielsweise eine Schnittstelle zu einem Netzwerk sein.

In einer weiteren vorteilhaften Ausgestaltung der Erfindung wird der Transport des Aufzeichnungsmaterials im Markierungsmittel von dem ersten Transportmittel angehalten, sofern feststellbar ist, daß Bilddaten mit Bildinformationen eines auf das Aufzeichnungsmaterial zu schreibenden Bildes nicht empfangen werden. Aufgrund dieses Nichtempfangens der Bilddaten kann es nämlich möglich sein, daß das Bildformat des auf das Aufzeichnungsmaterial zu beschreibenden Bildes, insbesondere in Transportrichtung des Aufzeichnungsmaterials, nicht feststellbar ist. Dadurch kann durch das Markierungsmittel eine entsprechende Markierung zum Kennzeichnen des Anfangs und/oder des Endes dieses Bildes auf dem Aufzeichnungsmaterial nicht gesetzt werden. Das Nichtempfangen von Bilddaten kann beispielsweise dadurch festgestellt werden, daß ein ansonsten kontinuierlicher Bilddatenstrom, der an dem Empfangsmittel empfangen wird, unterbrochen ist. Es kann auch eine bestimmte vorgegebene Zeitdauer festgelegt sein, während der das Empfangsmittel nicht in der Lage ist, Bilddaten zu empfangen. Erfolgt während dieser Zeitdauer kein Bilddatenempfang, so wird der Transport des Aufzeichnungsmaterials in dem Markierungsmittel angehalten.

In einer weiteren vorteilhaften Ausgestaltung der Erfindung erfolgt ein Weitertransportieren des Aufzeichnungsmaterials in dem Markierungsmittel, sofern Bilddaten mit den vollständigen Bildinformationen des Bildes, dessen Nichtempfangen zuvor festgestellt wurde, empfangen werden. Dadurch kann vorteilhafterweise sichergestellt werden, daß mittels der Bilddaten mit den vollständigen Bildinformationen das Format des Bildes feststellbar ist, so daß das Markierungsmittel in der Lage ist, eine Markierung für dieses Bildes auf dem Aufzeichnungsmaterial vorzusehen.

In einer weiteren besonders vorteilhaften Ausgestaltung der Erfindung wird der Transport des Aufzeichnungsmaterials in dem Markierungsmittel angehalten, sofern eine gesonderte Information über das Längenformat eines der auf das Aufzeichnungsmaterial zu schreibenden Bilder nicht empfangen werden kann. Die Angabe des Längenformats dieses Bildes dient dem Markierungsmittel dazu, die Markierung für den Anfang und/oder das Ende dieses Bildes auf dem Aufzeichnungsmaterial aufzubringen.

Ein entsprechendes Weitertransportieren des Aufzeichnungsmaterials in dem Markierungsmittel erfolgt vorteilhafterweise, wenn die zuvor nicht empfangene Information über das Längenformat des Bildes empfangen werden kann.

Der Transport des Aufzeichnungsmaterials in der Ausgabeeinheit wird vorteilhafterweise nach dem Nichtempfangen von Bilddaten eines der auf das Aufzeichnungsmaterial zu schreibenden Bilder erst dann angehalten, wenn die beim Feststellen des Nichtempfangens von Bilddaten in der Ausgabeeinheit momentan ausgegebenen Bildinformationen eines bestimmten Bildes vollständig ausgegeben worden sind, so daß das Aufzeichnungsmaterial vollständig mit den Bildinformationen dieses bestimmten Bildes beschrieben ist.

In einer weiteren, besonders vorteilhaften Ausgestaltung der Erfindung wird die Transportrichtung des Aufzeichnungsmaterials in der Ausgabeeinheit nach dem Anhalten des Transports in der Ausgabeeinheit umgekehrt. Das zweite Transportmittel bewegt daher das Aufzeichnungsmaterial in der zum normalen Ausgeben von Bildinformationen entgegengesetzten Transportrichtung. Dadurch wird gewährleistet, daß der Weitertransport des Aufzeichnungsmaterials in die normale Transportrichtung zum Ausgeben der Bildinformationen erfolgen kann, sobald die Information über das Längenformat eines der Bilder und/oder die vollständigen Bildinformationen dieses Bildes empfangen wurden. Das Warten auf das Empfangen der vollständigen Bildinformationen des Bildes, und zwar unabhängig davon, ob das Längenformat gesondert empfangen oder aus den vollständig empfangenen Bilddaten mit den Bildinformationen des Bildes bestimmt wird, ist vorteilhaft, da gewährleistet ist, daß die vollständigen Bildinformationen vorhanden sind und somit zum Ausgeben an die Ausgabeeinheit weitergeleitet werden können. Ein eventuell erneutes Anhalten des Transports des Aufzeichnungsmaterials aufgrund nicht vollständig an der Ausgabeeinheit verfügbarer Bildinformationen des Bildes kann dadurch vermieden werden. Aufgrund der unmittelbar an das Anhalten anschließenden Transportrichtungsumkehr im Bereich der Ausgabeeinheit kann die Zeit, in der auf die Formatinformation oder die vollständigen Bildinformationen gewartet wird, dadurch ausgenutzt werden, daß das Aufzeichnungsmaterial in der Ausgabeeinheit bereits an die Stelle zurückgefahren wird, in der ein problemloser Weitertransport des Aufzeichnungsmaterials bei Eintreffen der Format- bzw. der vollständigen Bildinformationen erfolgen kann. Das Aufzeichnungsmaterial wird dabei vorteilhafterweise soweit zurückgefahren, daß beim Weitertransportieren des Aufzeichnungsmaterials in der Ausgabeeinheit ein Erreichen von normalen Transportbedingungen gewährleistet ist, wenn an der Ausgabeposition das Ende der zuvor zuletzt auf das Aufzeichnungsmaterial beschriebenen Bildinformation erreicht wird. Bei den normalen Transportbedingungen handelt es sich um vorgegebene bekannte Zustände beim Transport des Aufzeichnungsmaterials, in denen insbesondere eine möglichst konstante Transportgeschwindigkeit eingestellt ist. Insbesondere Brems- und Beschleunigungsphasen beim Transport des Aufzeichnungsmaterials zählen nicht zu den normalen Transportbedingungen. Demzufolge kann unmittelbar nach der Beschleunigungsphase beim Wiederanfahren des Aufzeichnungsmaterials die Ausgabe von Bildinformationen durch die Ausgabeeinheit erfolgen.

Weitere vorteilhafte Ausgestaltungen der Erfindung können den abhängigen Ansprüchen entnommen werden.

Im Folgenden werden die Erfindung und ihre Vorteile anhand von Ausführungsbeispielen beschrieben.

Es zeigen:
- Fig. 1: eine schematische Darstellung eines Ausführungsbeispiels einer erfindungsgemäßen Vorrichtung in einer Ausgestaltung als digitaler fotografischer Printer,
- Fig. 2A, B: ein Ablaufdiagramm eines Ausführungsbeispiels für ein Durchführen eines erfindungsgemäßen Verfahrens mittels des fotografischen Printers gemäß Fig. 1 und
- Fig. 3 A-F: beispielhafte, schematische Darstellungen von durch ein Markierungsmittel und eine Ausgabeeinheit verlaufendes Aufzeichnungsmaterial mit darauf vorgesehenen Abschnitten für Bilder.

Im Folgenden werden für gleiche und gleich wirkende Elemente durchweg gleiche Bezugszeichen verwendet.

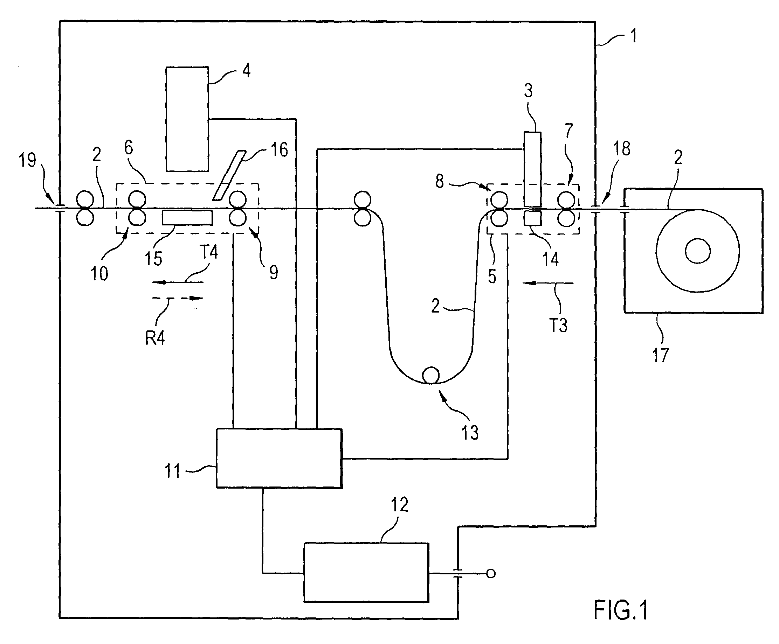

Fig. 1 zeigt ein Ausführungsbeispiel einer erfindungsgemäßen Vorrichtung zum Beschreiben von Aufzeichnungsmaterial mit Bildinformationen. Diese erfindungsgemäße Vorrichtung ist im vorliegenden Ausführungsbeispiel ein digitaler fotografischer Printer 1, mit dem Fotopapier 2, das als Aufzeichnungsmaterial dient, belichtet werden kann. Der Begriff "Beschreiben" dient in allgemeiner Form dazu, jegliche Arten von Aufbringen von Bildinformationen auf einem Aufzeichnungsmaterial zu umfassen. Neben dem Aufbelichten von Bildinformationen auf Fotopapier, wie es mittels des in diesem Ausführungsbeispiel beschriebenen Printers 1 erfolgt, kann beispielsweise auch ein Tintenstrahldrucker verwendet werden, der Tinte auf ein Papier ausgibt, das dann als Aufzeichnungsmaterial dient. Der Begriff Aufzeichnungsmaterial soll somit all diejenigen Materialien umfassen, die geeignet sind - angepaßt an die jeweilige Art des Beschreibens - die Bildinformationen aufzunehmen und darzustellen.

Das Fotopapier 2 stellt hier ein bandförmiges Aufzeichnungsmaterial dar, das in Rollen aufgewickelt ist. Zum Belichten des Fotopapiers 2 enthält der Printer 1 eine digitale Belichtungseinheit 4, der digitale Bilddaten zugeführt werden. Diese digitalen Bilddaten enthalten die Bildinformationen, die auf das Fotopapier 2 aufzubelichten sind. Die Belichtungseinheit 4 enthält im vorliegenden Ausführungsbeispiel Laser, mit denen wenigstens drei Laserstrahlen in den roten, grünen und blauen Wellenlängenbereichen des Spektrums erzeugt werden. Diese Laserstrahlen werden mittels eines oder mehrerer Modulatoren entsprechend der aufzubelichtenden Bildinformationen moduliert. Die Belichtungseinheit 4 stellt hier eine Ausgabeeinheit zum Ausgeben von Bildinformationen dar. Anstelle von Lasern zum Belichten des Fotopapiers 2 können auch andere Belichtungsmittel, wie z. B. LEDs oder auch sogenannte Digital Micromirror Devices, DMD, eingesetzt werden. Unter dem Begriff Ausgabeeinheit zum Ausgeben von Bildinformationen auf Aufzeichnungsmaterial sind neben Belichtungseinheiten, wie z. B. den Lasern, ebenso sonstige Beschreibungseinheiten zum Beschreiben von Aufzeichnungsmaterial, wie z. B. Tintenstrahler, zu verstehen.

Der fotografische Printer 1 weist auf der einen Seite einen Eingang 18 für die Eingabe des Fotopapiers 2 auf. Auf der gegenüberliegenden Seite des Printers 1 ist ein Ausgang 19 vorgesehen, an dem das mittels der Belichtungseinheit 4 belichtete Fotopapier 2 aus dem Printer 1 ausgegeben werden kann. Das in Rollenform aufgewickelte bandförmige Fotopapier 2 ist in einer Kassette 17 enthalten, die an den Printer 1 angedockt ist. Die Kassette 17 ist so an den Printer 1 angedockt, daß das bandförmige Fotopapier 2 über den Eingang 18 in den Printer 1 eingeführt wird. Der Printer 1 enthält mehrere Führungselemente zum Führen des Fotopapiers 2 und ebenso mehrere Transportrollenpaare zum Transportieren des Fotopapiers 2 von seinem Eingang 18 zu seinem Ausgang 19.

Neben dem Eingang 18 ist innerhalb des Printers 1 eine Stanze 3 angeordnet, mit der kleine Löcher unterschiedlicher Ausgestaltung in das Fotopapier 2 eingestanzt werden können. Die Stanze 3 dient als Markierungsmittel zum Markieren des Fotopapiers 2. Die von der Stanze 3 möglichst in den Randbereich des Fotopapiers 2 eingebrachten Löcher stellen daher solche Markierungen dar. Zum Transportieren des Fotopapiers 2 in eine Transportrichtung T3, d. h. von der Stanze 3 in Richtung der Belichtungseinheit 4, weist der Printer im Bereich der Stanze 3 ein erstes Transportmittel 5 auf. Dieses erste Transportmittel 5 enthält ein erstes Transportrollenpaar 7, das direkt neben dem Eingang 18 rechts neben der Stanze 3 angeordnet ist, und ebenfalls ein zweites Transportrollenpaar 8, das auf der linken Seite der Stanze 3 angeordnet ist. Die Transportrollenpaare enthalten jeweils zwei übereinander angeordnete, drehbar gelagerte Rollen, zwischen denen das bandförmige Fotopapier 2 hindurchgeführt ist. Die Transportrollenpaare werden über nicht dargestellte Antriebe angetrieben.

Zur exakten Führung des Fotopapiers 2 innerhalb der Stanze 3 enthält der Printer 1 im Bereich der Stanze 3 eine erste Führung 14, mit der eine exakte Führung des Fotopapiers 2 beim Transport in Richtung der Belichtungseinheit 4 gewährleistet ist. Mit Hilfe der Ausgestaltung und Anordnung dieser ersten Führung 14 und der Bewegung der beiden Transportrollenpaare 7 und 8 ist es möglich, mittels der Stanze 3 sehr exakt Löcher in das Fotopapier 2 einzustanzen. Die Stanze 3 kann sowohl so ausgestaltet sein, daß das Fotopapier 2 während des Transports mittels des ersten Transportmittels 5 in die Transportrichtung T3 die Löcher in das Fotopapier 2 einstanzt. Die Stanze 3 kann in diesem Fall als rotierende Stanze ausgestaltet sein, deren Rotationsgeschwindigkeit an die Transportgeschwindigkeit des Fotopapiers 2 im Bereich der Stanze 3 angepaßt ist. Es ist aber ebenso möglich, daß das Fotopapier 2 für den Markierungsvorgang innerhalb der Stanze 3 angehalten wird. Die Stanze 3 kann dann während dieses Papiertransport-Stopps die Löcher in das Fotopapier 2 einstanzen. Anstelle der Stanze 3 kann ebenfalls eine andere Art von Markierungsmittel innerhalb des Printers 1 vorgesehen sein. Als Markierungsmittel ist beispielsweise ebenso ein Tintenstrahldrucker denkbar, der entsprechende Markierungen auf das Aufzeichnungsmaterial aufbringt. Für die Funktionsweise der vorliegenden Erfindung ist es nicht notwendig, daß Löcher mittels des Markierungsmittels in das Fotopapier 2 eingebracht werden. Solche Markierungen können auch in anderer Form erzeugt werden.

Unterhalb der Belichtungseinheit 4 ist innerhalb des Printers 1 eine zweite Führung 15, die als Papierbühne dient, angeordnet. Diese Papierbühne 15 dient zum Führen des Fotopapiers 2 im Bereich der Belichtungseinheit 4. Die Papierbühne 15 ist dabei so konstruiert, daß ein Führen und Transportieren des Fotopapiers 2 im Bereich der Belichtungseinheit 4 sowohl in einer Richtung T4, d. h. von der Belichtungseinheit 4 in Richtung des Ausgangs 19, als auch in eine entgegengesetzte Richtung R4, d. h. von der Belichtungseinheit 4 in Richtung der Stanze 3, hochexakt möglich ist. Sowohl die erste Führung 14 im Bereich der Stanze 3 als auch die zweite Führung 15 im Bereich der Belichtungseinheit 4 können aktive oder auch passive Elemente zum Führen des Fotopapiers 2 aufweisen. Beispielsweise können Lenkrollen zum aktiven Lenken des Fotopapiers 2 in den Führungen 14 und/oder 15 enthalten sein.

Zum Transportieren des Fotopapiers 2 innerhalb des Bereichs der Belichtungseinheit 4 enthält der Printer 1 ein zweites Transportmittel 6. Das zweite Transportmittel 6 weist ein erstes Transportrollenpaar 9 auf, das rechts neben der Papierbühne unterhalb der Belichtungseinheit 4 angeordnet ist. Des Weiteren weist das zweite Transportmittel 6 ein zweites Transportrollenpaar 10 auf, das auf der linken Seite der Papierbühne 15 unterhalb der Belichtungseinheit 4 angeordnet ist. Das zweite Transportmittel 6 kann das Fotopapier 2 im Bereich der Belichtungseinheit 4 sowohl in die Richtung T4 als auch in die entgegengesetzte Richtung R4 transportieren. Der Antrieb, der zum Drehen der beiden Transportrollenpaare 9 und 10 dient, ist dazu umschaltbar. Die Transportrichtung des Fotopapiers 2 und die Drehrichtungen der Rollen der beiden Transportrollenpaare 9 und 10 sind umkehrbar. In direkter Nähe der Papierbühne 15 und derjenigen Stelle auf der Papierbühne 15, auf der der von der Belichtungseinheit 4 ausgegebene Laserstrahl auf das Fotopapier 2 auftreffen soll, ist ein Sensor 16 angeordnet, mit dem sich die von der Stanze 3 in das Fotopapier 2 eingebrachten Markierungen (Löcher) detektieren lassen. Der Sensor 16 kann beispielsweise eine Lichtschranke sein.

Zwischen der Stanze 3 und der Belichtungseinheit 4 ist eine Papierschlaufe 13 eingerichtet. Diese Papierschlaufe 13 dient als kleiner Pufferspeicher zum Zwischenspeichern von Fotopapier 2. Dadurch ist der Transport des Fotopapiers 2 innerhalb des Bereichs der Stanze 3 von dem Transport des Fotopapiers 2 im Bereich der Belichtungseinheit 4 entkoppelt. Des Weiteren ist es möglich, die Belichtungseinheit 4 zum Aufbelichten der Bildinformationen auf das Fotopapier 2 kurzzeitig weiterhin mit Fotopapier 2 zu versorgen, obwohl der Transport des Fotopapiers 2 im Bereich der Stanze 3 gestoppt ist und damit ein Transportieren von Fotopapier von der Stanze 3 in die Papierschlaufe 13 kurzzeitig nicht erfolgt.

Der Printer 1 enthält ein Steuermittel 11, das zum Steuern der mit dem Printer 1 ausführbaren Funktionen und damit der steuerbaren Komponenten des Printers 1 dient. Das Steuermittel 11 ist dazu insbesondere mit dem ersten und zweiten Transportmittel 5 und 6, der Stanze 3 und der Belichtungseinheit 4 verbunden. Die beiden Transportmittel 5 und 6 erhalten über das Steuermittel 11 entsprechende Ansteuersignale zum Ausführen des Transports des Fotopapiers 2 im Bereich der Stanze 3 bzw. im Bereich der Belichtungseinheit 4. Insbesondere ist es mittels des Steuermittels 11 möglich, den Transport im Bereich der Stanze 3 in Richtung T3 durchzuführen, aber ebenso den Transport zu unterbrechen. Des Weiteren kann mittels des Steuermittels 11 das zweite Transportmittel 6 so angesteuert werden, daß der Transport des Fotopapiers 2 in Richtung T4, aber ebenso in die entgegengesetzte Richtung R4 durchgeführt wird. Ebenso ist es möglich, mittels des Steuermittels 11 das zweite Transportmittel 6 zum Stoppen des Transports des Fotopapiers 2 anzusteuern. Die beiden Transportmittel 5 und 6 sind unabhängig voneinander mittels des Steuermittels 11 ansteuerbar.

Die Verbindung zwischen dem Steuermittel 11 und der Stanze 3 dient dazu, die Stanze 3 mit geeigneten Signalen anzusteuern, um das Einstanzen der Löcher in das Fotopapier 2 durchzuführen. Das Steuermittel 11 ist in der Lage, das Längenformat der auf das Fotopapier 2 aufzubelichtenden Bilder - in Transportrichtung betrachtet - festzustellen. Dies kann beispielsweise aufgrund einer gesonderten Angabe über diese jeweiligen Längen erfolgen. Es kann aber ebenso möglich sein, diese jeweiligen Längenformate der Bilder aus Datensätzen mit den jeweiligen digitalen Bilddaten der Bilder zu bestimmen.

Die Verbindung zwischen dem Steuermittel 11 und der Belichtungseinheit 4 dient insbesondere zur Ansteuerung der Belichtungseinheit 4 mittels digitaler Bilddaten, die die Bildinformationen enthalten, die auf das Fotopapier 2 aufzubelichten sind. Zum Empfangen dieser Bildinformationen enthält der Printer 1 ein Empfangsmittel 12, das Bilddaten empfangen kann. Diese Bilddaten werden von dem Empfangsmittel 12 an das Steuermittel 11 weitergeleitet. Dazu ist das Steuermittel 11 mit dem Empfangsmittel 12 verbunden. Das Empfangsmittel 12 kann beispielsweise eine Schnittstelle zu einem Netzwerk enthalten. Es ist aber ebenso möglich, daß die Bilddaten mit den Bildinformationen auf einer Diskette, einer CD-ROM, etc. gespeichert sind und das Empfangsmittel 12 ein entsprechend ausgestaltetes Lesemittel zum Lesen eines solchen Mediums enthält. Das Netzwerk, über das das Empfangsmittel mit Bilddaten versorgt wird, kann sowohl ein sogenanntes Local Area Network, LAN, innerhalb eines Fotofinishing-Labor sein. Es ist aber ebenso möglich, daß das Empfangsmittel alternativ oder zusätzlich Bilddaten aus einem öffentlichen Datennetzwerk, wie beispielsweise dem Internet, empfangen kann. Zusätzlich zu den Bilddaten mit den Bildinformationen können über das Empfangsmittel 12 Begleitdaten zu den jeweiligen Bilddaten empfangen werden. Solche Begleitdaten enthalten beispielsweise das gewünschte Format für die Herstellung der Bilder mittels des Printers 1. Das Steuermittel 11 bereitet die von dem Empfangsmittel 12 empfangenen Bilddaten vorteilhafterweise auf. Durch diese Aufbereitung kann beispielsweise die Belichtung mittels der Belichtungseinheit 4 an die besonderen Eigenschaften des verwendeten Fotopapiers 2 angepaßt werden.

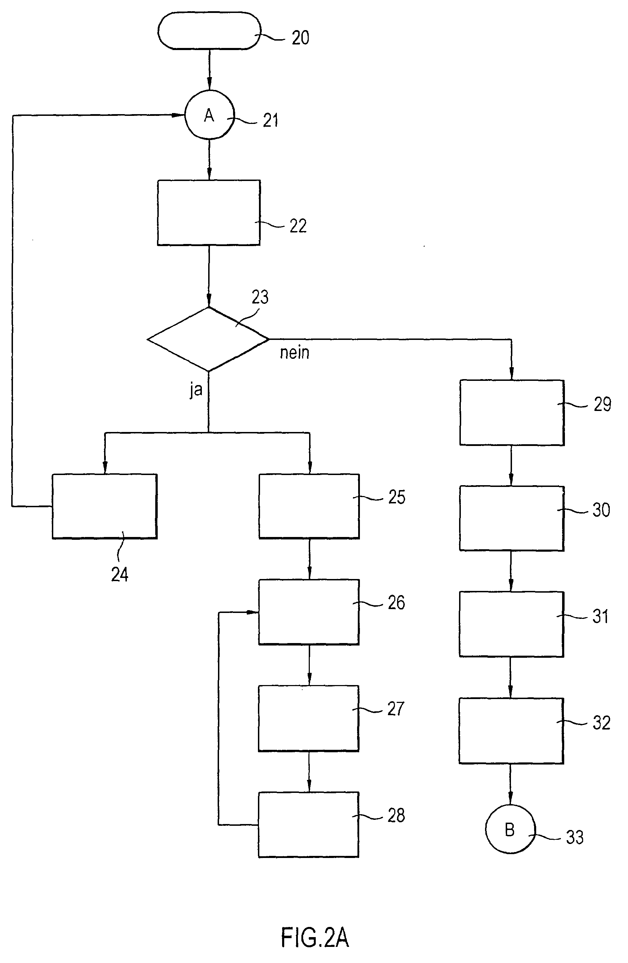

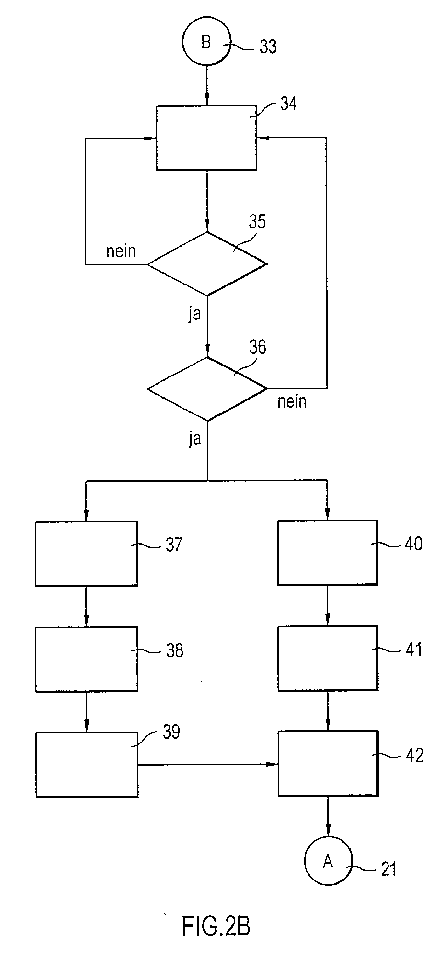

Im Folgenden wird anhand der Fig. 2A und 2B ein Ausführungsbeispiel zum Durchführen des erfindungsgemäßen Verfahrens mittels des fotografischen Printers 1 gemäß der Fig. 1 beschrieben.

Die Fig. 2A und 2B zeigen ein beispielhaftes Ablaufdiagramm des erfindungsgemäßen Verfahrens, mit dem ein Belichten des Fotopapiers 2 mittels der Belichtungseinheit 4 des Printers 1 auch nach einem Unterbrechen des Transports des Fotopapiers 2 durch den Printer 1 erfolgen kann. Der Übergang des in der Fig. 2A dargestellten ersten Teils des Ablaufdiagramms zu dem in der Fig. 2B dargestellten zweiten Teil des Ablaufdiagramms wird in einem Verfahrensschritt 33 mit einem Abzweigungspunkt B bezeichnet. Die Rückverzweigung am Ende des Ablaufdiagramms (Fig. 2B) zum Anfang des Ablaufdiagramms (Fig. 2A) wird in einem Verfahrensschritt 21 mit einem Abzweigungspunkt A bezeichnet.

Fig. 2A zeigt zunächst einen ersten Verfahrensschritt 20, der den Anfang des Ablaufdiagramms bezeichnet. An diesen Anfang 20 schließt sich der Abzweigungspunkt A in einem weiteren Verfahrensschritt 21 an. Nach dem Abzweigungspunkt A erfolgt in einem Verfahrensschritt 22 das Empfangen von Bilddaten an dem Empfangsmittel 12. Diese Bilddaten enthalten die Bildinformationen von mehreren Bildern, die mittels des Printers 1 auf das Fotopapier 2 aufzubelichten sind. Die Bilddaten, die in dem Verfahrensschritt 22 empfangen werden, werden hier über ein Netzwerk in den Printer 1 eingespeist. Die Bildinformationen, die in den Bilddaten enthalten sind, wurden in einem nicht weiter beschriebenen Scannvorgang ermittelt, in dem Filmnegative von einem Scanner gelesen werden. Die von dem Scanner ermittelten Bilddaten werden aufbereitet und über das Netzwerk an das Empfangsmittel 12 übertragen. In einem nächsten Schritt 23 wird überprüft, ob ein vollständiger Datensatz mit den Bilddaten eines auf das Fotopapier 2 aufzubelichtenden Bildes von dem Empfangsmittel 12 empfangen wurde. Aufgrund dieses vollständigen Datensatzes ist es möglich, mittels des Steuermittels 11 das Längenformat, in Transportrichtung des Fotopapiers betrachtet, für das jeweils aufzubelichtende Bild festzustellen. Anstelle oder zusätzlich zur Überwachung des Empfangs des vollständigen Datensatzes von Bilddaten in dem Verfahrensschritt 23 ist es möglich, den Empfang des Längenformats des jeweiligen auf das Fotopapier 2 aufzubelichtenden Bildes zu überwachen. Konnte in dem Verfahrensschritt 23 anhand des empfangenen vollständigen Datensatzes von Bilddaten und/oder des Empfangs einer gesonderten Information das Längenformat des jeweils aufzubelichtenden Feldes festgestellt werden, so verzweigt das erfindungsgemäße Verfahren zu einem weiteren Schritt 24, in dem die Stanze 3 von dem Steuermittel 11 so angesteuert wird, daß sie entsprechend des in dem Schritt 23 bestimmten Längenformats eine Markierung in das Fotopapier 2 einbringt. Dadurch kann gewährleistet werden, daß der Abstand zwischen dieser von der Stanze 3 in das Fotopapier 2 eingebrachten Marke zu der in Transportrichtung T3 des Fotopapiers 2 vorhergehenden Marke so groß ist, daß das später mittels der Belichtungseinheit 4 aufzubelichtende Bild entsprechend des gewünschten und bestimmten Längenformats aufbelichtet werden kann. Nach dem Markieren des Fotopapiers 2 in dem Schritt 24 verzweigt das erfindungsgemäße Verfahren an dieser Stelle zu dem Abzweigungspunkt A im Schritt 21. Die Stanze 3 wartet somit auf eine neue Information über das Längenformat des nächsten Bildes, um eine entsprechende Markierung einzubringen.

Neben der Verzweigung zu dem Verfahrensschritt 24 verzweigt das Verfahren nach dem Feststellen des Längenformates in dem Schritt 23 zu einem Schritt 25, in dem die empfangenen Bilddaten zwischengespeichert werden. Dazu enthält der Printer 1 einen nicht dargestellten Speicher. Das Fotopapier 2 wird u. a. mittels der beiden Transportmittel 5 und 6 kontinuierlich in dieser Phase des Verfahrens von dem Eingang 18 in Richtung des Ausganges 19 transportiert. Nach dem Zwischenspeichern der Bilddaten in dem Speicher wird in einem Schritt 26 mittels des Sensors 16 die zuvor von der Stanze 3 in das Fotopapier 2 eingestanzte Markierung überwacht. Erkennt der Sensor 16 diese Markierung, so werden in einem nachfolgenden Verfahrensschritt 27 die zuvor in dem Speicher abgespeicherten Bilddaten abgerufen und aufgrund der Steuerung des Steuermittels 11 an die Belichtungseinrichtung 4 weitergeleitet. In einem anschließenden Schritt 28 werden die in den weitergeleiteten Bilddaten enthaltenen Bildinformationen von der Belichtungseinheit 4 auf das Fotopapier 2 aufbelichtet. Zwischen dem Erkennen der Markierung mittels des Sensors 16 und dem Aufbelichten der dieser Markierung zugeordneten Bildinformationen mittels der Belichtungseinheit 4 erfolgt ein genau definierter Vorschub des Fotopapiers 2 mittels des zweiten Transportmittels 6. Auf diese Weise kann das Belichten des Bildes unmittelbar an der zugeordneten Markierung auf dem Fotopapier 2 beginnen. Nach dem vollständigen Belichten des jeweiligen Bildes verzweigt das Verfahren von dem Schritt 28 zu dem Schritt 26. Das Verfahren erwartet das Detektieren der nächsten Markierung, um dann wie beschrieben die Bildinformationen des nächsten Bildes auf das Fotopapier 2 aufzubelichten.

Konnte bei der Überprüfung in dem Verfahrensschritt 23 kein vollständiger Datensatz von Bilddaten festgestellt werden, die einem nachfolgend aufzubelichtenden Bild zugeordnet sind, oder eine entsprechende gesonderte Information empfangen werden, so daß ein Feststellen des Längenformates dieses Bildes nicht möglich ist, so verzweigt das erfindungsgemäße Verfahren zu einem Schritt 29. In diesem Schritt 29 wird der Weitertransport des Fotopapiers 2 mittels des ersten Transportmittels 5 im Bereich der Stanze 3 unterbrochen. In einem dem Verfahrensschritt 29 nachfolgenden Schritt 30 wird überprüft, ob dasjenige Bild, daß zum Zeitpunkt des Unterbrechens des Transports im Bereich der Stanze gerade mittels der Belichtungseinheit 4 auf das Fotopapier 2 aufbelichtet wird, fertigbelichtet ist. Ist dies der Fall, so verzweigt das Verfahren zu dem Verfahrensschritt 31, indem auch das Belichten von Bildinformationen auf Fotopapier 2 unterbrochen wird. Der Transport des Fotopapiers 2 im Bereich der Belichtungseinheit 4 wird aufgrund entsprechender Ansteuerung des zweiten Transportmittels 6 durch das Steuermittel 11 gestoppt. Dieses Stoppen des Weitertransports des Fotopapiers 2 im Bereich der Belichtungseinheit 4 unterliegt einem bestimmten Bremsvorgang. Dieser Bremsvorgang bewirkt, daß die Geschwindigkeit des Vorschubs des Fotopapiers 2 im Bereich der Belichtungseinheit 4 unbestimmt ist. Eine Abstimmung des Belichtens auf den Vorschub des Fotopapiers in Richtung T4 ist daher schwierig, wenn nicht gar unmöglich. Aus diesem Grunde wird zunächst die Belichtung mittels der Belichtungseinheit 4 unterbrochen und dann der Bremsvorgang zum Stoppen des Fotopapiers 2 eingeleitet. Dies hat allerdings ebenso zur Folge, daß das Fotopapier 2 durch das Transportmittel 6 weitertransportiert wird, ohne daß gleichzeitig Bildinformationen aufbelichtet werden. Dies könnte zu einem ungenutzten Verbrauch des Fotopapiers 2 führen.

Um diesen ungenutzten Verbrauch des Fotopapiers 2 zu vermeiden, wird das Fotopapier 2 nach dem Unterbrechen der Belichtung und dem Beenden des Bremsvorganges in einem nachfolgenden Schritt 32 im Bereich der Belichtungseinheit 4 von dem zweiten Transportmittel 6 zurückgefahren. Dieses Zurückfahren erfolgt in die der Transportrichtung T4 entgegengesetzte Rückwärtsrichtung R4. Dieses Zurückfahren des Fotopapiers 2 erfolgt erfindungsgemäß nicht im Bereich der Stanze 3. Das erste Transportmittel 5 führt während des Rücktransport des Fotopapiers 2 im Bereich der Belichtungseinheit 4 mittels des zweiten Transportmittels 6 keinerlei Transportbewegung durch. Vorteilhafterweise bleibt der Transport des Fotopapiers 2 im Bereich der Stanze 3 auch während des Rücktransports des Fotopapiers 2 im Bereich der Belichtungseinheit 4 unterbrochen.

Nachdem das Zurückfahren des Fotopapiers 2 im Bereich der Belichtungseinheit 4 abgeschlossen ist, verzweigt das Verfahren über den Abzweigungspunkt B in einem Verfahrensschritt 33 zum zweiten Teil des Ablaufdiagramms, das anhand der Fig. 2B dargestellt ist. Im nachfolgenden Schritt 34 sind sowohl der Transport des Fotopapiers 2 im Bereich der Stanze 3 und im Bereich der Belichtungseinheit 4 unterbrochen. In einem Schritt 35 wird nun überprüft, ob das Empfangsmittel 12 nach der Unterbrechung des Empfangs von Bilddaten erneut Bilddaten empfängt. Ist dies nicht der Fall, so verzweigt das Verfahren erneut zurück zu dem Verfahrensschritt 34. Wurde ein Weiterempfang in dem Verfahrensschritt 35 festgestellt, so wird anschließend in einem nachfolgenden Schritt 36 untersucht, ob aufgrund des Weiterempfangs von Bilddaten oder weiteren Informationen in dem Schritt 35 das Längenformat des nächsten Bildes feststellbar ist. Ist dies nicht möglich, so verzweigt das Verfahren wiederum zurück zu dem Verfahrensschritt 34, so daß weiterhin der Transport im Bereich der Stanze 3 und der Belichtungseinheit 4 unterbrochen ist und auf den Weiterempfang von Bilddaten und/oder zusätzlichen Informationen gewartet wird.

Konnte in dem Verfahrensschritt 36 das Längenformat festgestellt werden, so verzweigt das Verfahren anschließend zu einem Verfahrensschritt 40, in dem der Weitertransport des Fotopapiers 2 im Bereich der Stanze 3 durchgeführt wird. Die Geschwindigkeit, mit der dieser Weitertransport im Bereich der Stanze 3 erfolgt, kann vorteilhafterweise kurzzeitig höher eingestellt werden, als unter normalen Transportbedingungen. Dies ist insbesondere dann wichtig, wenn aufgrund der Unterbrechung des Vorschubs des Fotopapiers 2 im Bereich der Stanze 3 (Schritt 39) gemäß dem Schritt 30 weiterhin im Bereich der Belichtungseinheit ein Transport des Fotopapiers 2 erfolgt, um das augenblicklich belichtete Bild zu Ende zu belichten. In diesem Fall wird nämlich die Länge des Fotopapiers 2 in der Papierschlaufe 13 verringert. Um diese Verkürzung der Papierschlaufe 13 rückgängig zu machen, kann daher die Vorschubgeschwindigkeit des Fotopapiers 2 im Bereich der Stanze 3 kurzzeitig erhöht werden. Auch ein gegenüber dem Weitertransportieren des Fotopapiers 2 im Bereich der Stanze 3 zeitlich verzögertes Weitertransportieren im Bereich der Belichtungseinheit 4 ist zum Erreichen dieses Vorteils möglich. Dadurch kann gewährleistet werden, daß die Länge des Fotopapiers 2 im Bereich der Papierschlaufe 13 einen bestimmten vorgegebenen Wert einnimmt. Es ist aber ebenso denkbar, daß die Transportgeschwindigkeit im Bereich der Stanze 3 gegenüber derjenigen im Bereich der Belichtungseinheit 4 kurzzeitig etwas geringer eingestellt oder der Weitertransport des Fotopapiers 2 im Bereich der Stanze 3 gegenüber demjenigen im Bereich der Belichtungseinheit 4 zeitlich verzögert duchgeführt wird. Dies ist insbesondere dann vorteilhaft, wenn durch das Zurückfahren von Fotopapier 2 im Bereich der Belichtungseinheit 4 mehr Fotopapier 2 in den Bereich der Papierschlaufe 13 gelangte, als aufgrund des bestimmten vorgegebenen Wertes gewünscht ist.

In einem Schritt 41 wird dann, wie bereits im Schritt 24, mittels der Stanze 3 eine Markierung an der zuvor bestimmten Stelle des Fotopapiers 2 eingebracht. Das Markieren des Fotopapiers 2, wie es im Verfahrensschritt 41 durchgeführt wird, kann ebenso auch bereits während des Weitertransports des Fotopapiers 2 im Schritt 40 ausgeführt werden. Nach dem Markieren des Fotopapiers 2 im Schritt 41 wird der Printer 1 in einem Schritt 42 in einem stabilen Markierbetrieb gefahren.

Zusätzlich zu dem Verzweigen zu dem Verfahrensschritt 40 verzweigt das erfindungsgemäße Verfahren nach der Feststellung des Längenformats des Bildes in dem Schritt 36 zu einem Verfahrensschritt 37, in dem auch das Fotopapier 2 im Bereich der Belichtungseinheit 4 weitertransportiert wird. Die von dem Empfangsmittel 12 weiter empfangenen Bilddaten werden an den Zwischenspeicher in einem Schritt 38 übermittelt. In einem Schritt 39 wird das Belichten von Bildinformationen auf das Fotopapier 2 dann gestartet, sobald die erforderlichen stabilen Transportbedingungen beim Transport des Fotopapiers 2 vorliegen, die nächste Markierung von dem Sensor 16 erkannt und das Ende des vorangegangenen Bildes in der Ausgabeposition der Belichtungseinheit 4 erreicht wurde. Diese erforderlichen stabilen Transportbedingungen sind vorteilhafterweise genau dann erreicht, wenn die nächste Markierung durch den Sensor 16 erkannt wird. Im Schritt 32 muß daher gewährleistet sein, daß das Fotopapier 2 eine entsprechend festgelegte Strecke zurückgefahren wird. Nach dem Starten der Belichtung mittels der Belichtungseinheit 4 liegt im nächsten Verfahrensschritt 42 ebenfalls ein stabiler Belichtungsbetrieb vor. Nachdem im Verfahrensschritt 42 sowohl ein stabiler Belichtungs- als auch Markierungsbetrieb vorliegt, verzweigt das Verfahren erneut zu dem Schritt 21, und damit dem Abzweigungspunkt A, am Anfang des Ablaufdiagrammes (Fig. 2A).

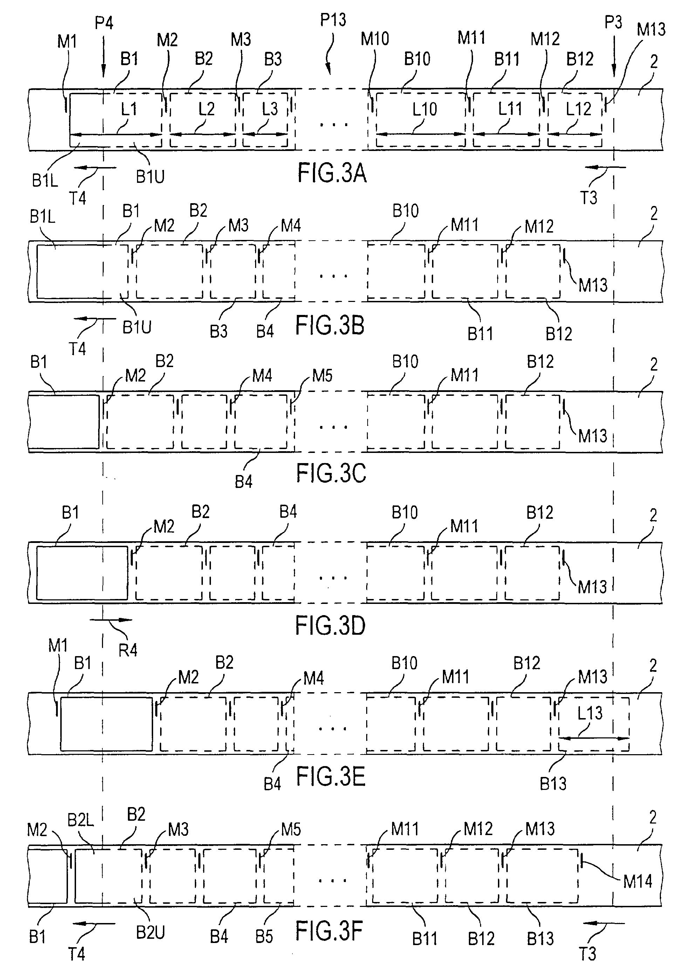

Anhand der Fig. 3A bis F werden im Folgenden verschiedene Positionen des Fotopapiers 2 bei seinem Verlauf von der Stanze 3 zu der Belichtungseinheit 4 beschrieben. Auf dem Fotopapier 2 sind dabei verschiedene Abschnitte dargestellt, die für das Aufbelichten von Bildern mit unterschiedlichen Formaten, insbesondere Längenformaten, vorgesehen sind. Die Position P3 bezeichnet dabei die Position der Stanze 3, die Position P13 die Position der Papierschlaufe 13 und P4 die Position der Belichtungseinheit 4 in dem Printer 1. Auf den in den Fig. 3A bis F dargestellten Ausschnitten des Fotopapiers 2 sind verschiedene Bereiche B1 bis B13 eingezeichnet, die auf dem Fotopapier 2 vorgesehene Bereiche für Bilder darstellen. Diese Bereiche B1 bis B13 haben mehrere unterschiedliche Längenformate L1 bis L13. Vor den jeweiligen Bildbereichen B1 bis B13 sind jeweils diesen Bildbereichen zugeordnete Markierungen M1 bis M13 auf dem Fotopapier 2 angebracht. Diese Markierungen M1 bis M13 werden durch die Stanze 3 an der Position P3 auf das Fotopapier 2 aufgebracht.

Die Fig. 3A zeigt die erste Situation beim Aufbelichten von Bildinformationen und Markieren von Markierungen auf das Fotopapier 2. Der erste Bildbereich B1 ist hier in einen ersten Teilbereich B1L und einen zweiten Bilddteilbereich B1U unterteilt. Der erste Bildteilbereich B1L ist mit durchgezogenen Linien links neben der Position P4 eingezeichnet. In diesen ersten Bildteilbereich B1L sind bereits Bildinformationen auf das Fotopapier aufbelichtet, die zu dem Bild gehören, das in den Bildbereich B1 aufbelichtet werden soll. Der zweite Bildteilbereich B1U erstreckt sich rechts neben der Position P4 der Belichtungseinheit 4. Er stellt einen bisher unbelichteten Teil des ersten Bildbereiches B1 dar, der für das weitere Aufbelichten von Bildinformationen des in den ersten Bildbereich B1 zu belichtenden Bildes vorgesehen ist. Die in den Fig. 3A bis F durchgehend umrandeten Bereiche der Bildbereiche B1 und B2 (Fig. 3F) stellen solche Bereiche dar, die bereits mit Bildinformationen belichtet wurden. Gestrichelte Bereiche der Bildbereiche B1 bis B13 stellen solche Bereiche dar, die bisher von der Belichtungseinheit 4 noch nicht mit Bildinformationen belichtet wurden, die allerdings zum Aufbelichten von Bildinformationen der jeweiligen Bilder vorgesehen sind.

In der ersten Transportsituation gemäß der Fig. 3A findet ein Transport des Fotopapiers 2 sowohl in die Transportrichtung T3 im Bereich der Position P3 und damit im Bereich der Stanze 3, als auch in die Transportrichtung T4 im Bereich der Position P4 und damit im Bereich der Belichtungseinheit 4, statt. In diesem Normalbetrieb werden von dem Empfangsmittel 12 kontinuierlich neue Bilddaten und Längenformate empfangen. Es ist somit ein kontinuierliches Markieren und Belichten möglich.

In der zweiten Situationsdarstellung des Fotopapiers 2 gemäß der Fig. 3B wurde der Empfang von Bilddaten und/oder von Längenformaten durch das Empfangsmittel 12 unterbrochen. Der Transport des Fotopapiers 2 im Bereich der Position P3 wird somit gestoppt. Der Transport des Fotopapiers 2 im Bereich der Position P4 läuft weiter, da noch nicht alle Bildinformationen für die vollständige Belichtung des für den Bereich B1 vorgesehenen Bildes mittels der Belichtungseinheit 4 aufbelichtet wurden. Dies ist in der Fig. 3B daran zu erkennen, daß immer noch ein, wenn auch kleinerer Bereich B1U als in Fig. 3A vorhanden ist. Der Transport des Fotopapiers 2 im Bereich P4 wird erst dann gestoppt, wenn alle Bildinformationen für das Bild im Bereich B1 aufbelichtet wurden.

Es ist ebenso möglich, den Transport des Fotopapiers 2 im Bereich P3 und die Funktion der Stanze 3 weiterlaufen zu lassen, bis keine weiteren Informationen über Längenformate von aufzubelichtenden Bildern im Printer 1 vorhanden sind. Dies kann dann vorteilhaft sein, wenn beim Unterbrechen des Empfangs noch weitere, bisher noch nicht von der Stanze 3 in Markierungen umgesetzte Informationen über Längenformate im Printer 1 abgespeichert sind.

Dies ist in der dritten Situation gemäß der Fig. 3C der Fall. Hier ist der erste Bildbereich B1 vollständig mit Bildinformationen beschrieben. Der Weitertransport des Fotopapiers 2 im Bereich der Position P4 wird daher ebenso unterbrochen. Einfachheitshalber kann dieses Stoppen des Fotopapiers im Bereich P4 vom Erkennen der nachfolgenden Markierung M2 durch den Sensor 16 abhängig gemacht werden. Gemäß der in der Fig. 3C dargestellten dritten Transportsituation des Fotopapiers 2 steht daher das Fotopapier 2 sowohl an der Position P3 als auch an der Position P4.

In der vierten Transportsituation des Fotopapiers 2, wie sie in der Fig. 3D dargestellt ist, werden weiterhin keine Bilddaten und/oder Längenformate an dem Empfangsmittel 12 empfangen. Das Fotopapier 2 wird weiterhin im Bereich der Stanze 3, und damit der Position P3, nicht transportiert. In diesem Bereich steht das Fotopapier 2 weiterhin. Im Bereich der Position P4 wird das Fotopapier 2 allerdings in die Rückwärtsrichtung R4 zurückgefahren. Die Strecke, um die das Fotopapier 2 im Bereich der Position P4 zurückgefahren wird, ist an das erneute Erreichen von stabilen Transportbedingungen bei einem Weiterbelichten angepaßt. Es soll damit gewährleistet werden, daß die Geschwindigkeit bei einem erneuten Transport des Fotopapiers 2 in die Richtung T4 stabil genau denjenigen Wert erreicht hat, auf den der Belichtungsvorgang mittels der Belichtungseinheit 4 abgestimmt ist. Dies umfaßt insbesondere den Beschleunigungszustand beim erneuten Anfahren des Fotopapiertransports. In dieser vierten Transportsituation gemäß der Fig. 3D wartet der Printer 1 erneut auf das Eintreffen von Bilddaten für ein nächstes sich an den Bildbereich B12 anschließenden Bildes.

In der nachfolgenden fünften Transportsituation gemäß der Fig. 3E wurden an dem Empfangsmittel 12 weitere Bilddaten empfangen. Diese Bilddaten enthalten Bildinformationen für das Bild, das in dem Bereich B13 aufbelichtet werden soll. Aufgrund des Empfangs dieser Bilddaten ist es möglich, die Länge L13 dieses Bildbereichs B13 festzustellen. Dieser Bildbereich B13 schließt sich unmittelbar an die Markierung M13 an.

In der sechsten Transportsituation des Fotopapiers 2, wie sie in der Fig. 3F dargestellt ist, wird das Fotopapier 2 sowohl in die Transportrichtung T3 im Bereich der Position P3 der Stanze 3 als auch in die Transportrichtung T4 im Bereich der Position P4 der Belichtungseinheit 4 transportiert.Aufgrund der bereits zuvor festgestellten Länge L13 des 13. Bildbereiches B13 setzt die Stanze 3 an der dazu bestimmten Stelle auf dem Fotopapier 2 eine Markierung M14, die direkt an das Ende des Bereiches B13 anschließt. Diese Markierung M14 ist einem, hier nicht mehr dargestellten Bildbereich zugeordnet, der sich an den Bildbereich B13 anschließt. Fig. 3F zeigt ebenfalls, daß das Fotopapier 2 im Bereich der Belichtungseinheit 4 weitertransportiert wird. Ein Teil B2L des zweiten Bildbereiches B2 wurde bereits mit Bildinformationen belichtet. Ein anderer Teil B2U des Bildbereichs B2 wurde bisher noch nicht mit Bildinformationen belichtet. Die Belichtung des Bildbereiches B2 wurde in Abhängigkeit von dem Erkennen der Markierung M2 durch den Sensor 16 gestartet. Zum Zeitpunkt des Belichtens dieses zweiten Bildbereichs B2 hat das Fotopapier 2 im Bereich P4 die Normalgeschwindigkeit für den Transport erreicht.

## Patentansprüche

1. Vorrichtung (1) zum Beschreiben von Aufzeichnungsmaterial (2) mit Bildinformationen, die mehreren Bildern (B1-B13) zugeordnet sind, wobei die Vorrichtung (1) folgendes aufweist:
- ein Markierungsmittel (3) zum Markieren des Aufzeichnungsmaterials (2) mit Markierungen (M1-M14), die den mehreren Bildern (B1-B13) zugeordnet sind,
- eine Ausgabeeinheit (4) zum Ausgeben von Bildinformationen auf das Aufzeichnungsmaterial (2),
- ein erstes Transportmittel (5) zum Transportieren des Aufzeichnungsmaterials (2) in dem Markierungsmittel (3) und
- ein zweites Transportmittel (6) zum Transportieren des Aufzeichnungsmaterials (2) in der Ausgabeeinheit (4),
**dadurch gekennzeichnet, daß**
das erste Transportmittel (5) und das zweite Transportmittel (6) so ausgestaltet sind, daß die Transportrichtung (T4, R4) des Aufzeichnungsmaterials (2) in der Ausgabeeinheit (4) unabhängig vom Transport (T3) des Aufzeichnungsmaterials (2) in dem Markierungsmittel (3) einstellbar ist.

2. Vorrichtung nach Anspruch 1, **dadurch gekennzeichnet, daß** sie ein Steuermittel (11) zum Erzeugen von Ansteuersignalen für das erste und das zweite Transportmittel (6) aufweist, die jeweils mit dem Steuermittel (11) verbunden sind.

3. Vorrichtung nach Anspruch 2, **dadurch gekennzeichnet, daß** das erste und das zweite Transportmittel (6) getrennt voneinander mittels des Steuermittels (11) ansteuerbar sind.

4. Vorrichtung nach einem der Ansprüche 1-3, **dadurch gekennzeichnet, daß** sie weiterhin ein Empfangsmittel (12) zum Empfangen von Bilddaten mit den Bildinformationen der mehreren Bilder (B1-B13) aufweist.

5. Vorrichtung nach einem der Ansprüche 1-4, **dadurch gekennzeichnet, daß** die Ausgabeeinheit (4) zum Empfangen von Ansteuersignalen mit dem Steuermittel (11) verbunden ist.

6. Vorrichtung nach Anspruch 4, **dadurch gekennzeichnet, daß** das erste Transportmittel (5) so ausgestaltet ist, daß ein Anhalten des Transports des Aufzeichnungsmaterials (2) in dem Markierungsmittel (3) in Abhängigkeit von einem Nichtempfangen von Bilddaten eines der mehreren Bilder (B1-B13) erfolgt.

7. Vorrichtung nach Anspruch 6, **dadurch gekennzeichnet, daß** das erste Transportmittel (5) so ausgestaltet ist, daß es nach dem Anhalten des Transports ein Weitertransportieren des Aufzeichnungsmaterials (2) in dem Markierungsmittel (3) in Abhängigkeit von einem Empfangen der vollständigen Bildinformationen desjenigen Bildes (B13) veranlaßt, dessen Bilddaten zuvor nicht empfangen wurden.

8. Vorrichtung nach Anspruch 4, **dadurch gekennzeichnet, daß** das erste Transportmittel (5) so ausgestaltet ist, daß ein Anhalten des Transports des Aufzeichnungsmaterials (2) in dem Markierungsmittel (3) in Abhängigkeit von einem Nichtempfangen einer Formatinformation über die Länge (L13), in Transportrichtung (T4, T3) des Aufzeichnungsmaterials (2) betrachtet, eines auf das Aufzeichnungsmaterial (2) zu schreibenden Bildes (B13) erfolgt.

9. Vorrichtung nach Anspruch 8, **dadurch gekennzeichnet, daß** das erste Transportmittel (5) so ausgestaltet ist, daß es nach dem Anhalten des Transports ein Weitertransportieren des Aufzeichnungsmaterials (2) in dem Markierungsmittel (3) in Abhängigkeit von dem Empfangen der Formatinformation über die Länge (L13) des auf das Aufzeichnungsmaterial (2) zu schreibenden Bildes (B13) veranlaßt.

10. Vorrichtung nach Anspruch 4, **dadurch gekennzeichnet, daß** das zweite Transportmittel (6) so ausgestaltet ist, daß ein Anhalten des Transports des Aufzeichnungsmaterials (2) in der Ausgabeeinheit (4) in Abhängigkeit von einem Nichtempfangen von Bilddaten eines der mehreren Bilder und in Abhängigkeit von dem Ausgeben der vollständigen Bildinformationen desjenigen Bildes (B1) erfolgt, dessen Bildinformationen beim Nichtempfangen der Bilddaten des Bildes mittels der Ausgabeeinheit (4) ausgegeben werden.

11. Vorrichtung nach Anspruch 10, **dadurch gekennzeichnet, daß** das zweite Transportmittel (6) so ausgestaltet ist, daß die Transportrichtung (T4, R4) des Aufzeichnungsmaterials (2) in der Ausgabeeinheit (4) nach dem Aussetzen des Transports des Aufzeichnungsmaterials (2) umkehrbar ist.

12. Vorrichtung nach Anspruch 11, **dadurch gekennzeichnet, daß** das Steuermittel (11) das zweite Transportmittel (6) so ansteuert, daß das Aufzeichnungsmaterial (2) so weit in Richtung des Markierungsmittels (3) zurücktransportiert wird, daß bei einem Weitertransportieren des Aufzeichnungsmaterials (2) zum erneuten Ausgeben von Bildinformationen vorgegebene Transportbedingungen vorhanden sind.

13. Vorrichtung nach Anspruch 12, **dadurch gekennzeichnet, daß** die vorgegebenen Transportbedingungen dann vorhanden sind, wenn eine stabile, annähernd konstante Transportgeschwindigkeit des Aufzeichnungsmaterials (2) im Bereich der Ausgabeeinheit (4) gegeben ist.

14. Verfahren zum Beschreiben von Aufzeichnungsmaterial (2) mit Bildinformationen, die mehreren Bildern (B1-B13) zugeordnet sind, wobei das Verfahren folgende Verfahrensschritte aufweist:
- Kennzeichnen des Aufzeichnungsmaterials (2) mit Markierungen (M1-M14), die den mehreren Bildern (B1-B13) zugeordnet sind,
- Ausgeben von Bildinformationen auf das Aufzeichnungsmaterial (2) und
- Transportieren des Aufzeichnungsmaterials (2) zum Kennzeichnen des Aufzeichnungsmaterials (2) und zum Ausgeben der Bildinformationen,
**dadurch gekennzeichnet, daß**
das Transportieren des Aufzeichnungsmaterials (2) zum Kennzeichnen desselben unabhängig von der Transportrichtung (T4, R4) des Aufzeichnungsmaterials (2) zum Ausgeben der Bildinformationen eingestellt wird.
